# EUROPEAN PATENT APPLICATION

(11) **EP 4 795 927 A1**
(43) Date of publication of application: **26.08.2026**
(21) Application number: 25160095.3
(22) Date of filing: 25.02.2025
(51) Int. Cl.: A01J 9/04, A01J 7/02, A23B 11/14, F25B 29/00

(54) **HEAT MANAGEMENT SYSTEM AND RELATED METHOD**

(71) Applicant: Sharma, Kumodak, Bursledon Southampton SO31 8LY (GB)
(72) Inventor: Sharma, Kumodak, Bursledon Southampton SO31 8LY (GB)
(74) Representative: Maidment, Marc

(57) **Abstract**

A heat management system (100) for minimising overall energy use in a process, in which the heat management system is operable in a first mode for chilling milk (600) or another product and recovering heat therefrom, and a second mode for transferring recovered heat through the system comprising:
a refrigeration system (500) for chilling the milk or product, the refrigeration system comprising a refrigeration circuit (550) for receiving a working fluid, including a compressor (554), an evaporator (552), an expansion valve (558), a condenser (556); and
a heat recovery system (10) for recovering heat from the milk or product, the heat recovery system comprising first and second heat reservoirs (12, 14),
in which during operation in the first mode, the refrigeration system is configured to cool the milk and at least some of the recovered heat is stored in the first heat reservoir, and
in which during operation in the second mode, the first heat reservoir is configured to provide heat to the evaporator, and the second heat reservoir is configured to receive heat from the condenser for subsequent use in the process.

## Description

The present invention relates to a management system and method for minimising overall energy use in a process, the process being particularly but not exclusively a milk cooling process for use on a dairy farm or similar facility, a method of chilling milk, and a refrigeration system.

### BACKGROUND TO THE INVENTION

Dairy farms can be legally required to chill milk within thirty minutes of milking. Refrigeration equipment needs to cool the milk as quickly as possible, with rapid cooling of milk being considered of higher quality. For dairy washdown purposes, water must be at least around 85°C. Dairy farmers can use heat recovery systems during milking to recover heat from the refrigeration system. This heat can be used to heat water for washdown purposes.

However, there are a number of problems associated with the above practice.

Cooling the milk as quickly as possible conflicts with the goal of heat recovery. The temperature of the heat sink should be relatively high to recover high-grade heat from the refrigeration system. However, a higher heat sink temperature reduces the cooling output of the refrigeration system. This issue is exacerbated in the summer when the temperature of the milk is higher. This can be accommodated by installing larger and more powerful equipment requiring a larger upfront investment, higher maintenance costs, more refrigerant, and more power.

The higher heat sink temperature also poses risks to the refrigeration equipment and its overall reliability. The low evaporation temperature (as is the case with cooling of milk) and high condensing temperature (due to heat being recovered at the same time as milking) lead to a high discharge temperature. Consequently, overheating of the refrigeration equipment is one of the most common causes of refrigeration equipment failure. To counteract premature failures, specialist refrigeration equipment may be required. Ensuring reliability requires equipment such as electronic expansion valves and discharge temperature control systems. Specialist refrigeration equipment is not standard on most dairy farm equipment and can pose difficulties when retrofitting, and can result in an increased cost. Despite this most if not all modern heat recovery systems which contain these measures are still limited to a maximum of 65°C of usable heat recovered.

For example, an average dairy farm in the UK may produce approximately 5000 litres of milk during milking and operate using an evaporation temperature of -7°C and a condensing temperature of 35°C. This would require a cooling output of 23 kW from the refrigeration equipment to cool the milk from 20°C to 4°C. The approximate power consumption with most modern dairy equipment is likely to be approximately 8 to 9 kW. In other words, at (-7/35°C) source and sink operating conditions the equipment is sufficient to provide the cooling output and meet all of the farm's needs.

However, if the condensing temperature is increased to 60°C to recover heat then the cooling output may drop by more than 40% (i.e. from 23 kW to 14 kW). Similarly, the power consumption may experience an increase by approximately 25%, (i.e. from 8 kW to 10.5 kW).

This reduction in cooling capacity and increased power consumption may be exacerbated during the summer when the milk temperature may be approximately 25°C. In this situation a cooling output of 30 kW may be required, whereas the refrigeration system may only be providing 14 kW.

The only practical solution to overcome this issue is to increase the size of the equipment to 30 kW. Larger equipment will have additional maintenance cost, higher refrigerant charge, and higher power requirements. This may not always be feasible on a dairy farm.

Notwithstanding the problems above, heat recovery from the milk refrigeration system does not provide a complete solution as further heating is required. Typically, a heat recovery system will raise the temperature to a maximum of about 45 to 50°C. However, water for washdown purposes needs to be heated further to 85°C. Due to the additional heating required, the water cannot be used until the washdown for the next milking which may be ten to twelve hours later.

Furthermore, the heat recovered from a milk refrigeration system needs to be heated further by a secondary system. On dairy farms it is usually of electric type and in other words a non-renewable source of heating. The other option is to have one or more waste heat recovery heat pumps. However, combining waste heat recovery heat pumps with milk refrigeration systems presents challenges with retrofitting and balancing thermal loads. At the low or ambient temperatures of milk production, a waste heat recovery heat pump may have insufficient heat to function to its full specifications. Conversely, in the summer, the refrigeration system may produce too much excess heat which cannot be adequately offset by the waste heat recovery heat pump. Not to mention that waste heat recovery heat pumps are extremely expensive pieces of kit especially in comparison to other methods such as glycol chillers, electric heating or similar other solutions.

Due to the high investment cost and technical difficulties of implementing a milk refrigeration heat recovery system let alone a milk refrigeration heat recovery system combined with a waste heat recovery heat pump, smaller farms are not incentivised to install them. Therefore almost all dairy farms use electric heaters to heat water at 85°C. The electric based heaters are typically vented heaters where the water is stored for ten to twelve hours and therefore experiences a large reduction in temperature due to heat loss. The final temperature may be 10 to 15°C lower than what was initially recovered by the milk refrigeration heat recovery system.

It is an object of the present invention to reduce or substantially obviate the aforementioned problems.

### STATEMENT OF INVENTION

According to a first aspect of the present invention, there is provided a heat management system for minimising energy use in a process, in which the heat management system is operable in a first mode for chilling milk or another product and recovering heat therefrom, and a second mode for transferring recovered heat through the system, the system comprising:
a refrigeration system for chilling the milk or product, the refrigeration system comprising a refrigeration circuit for receiving a working fluid, including an evaporator, a compressor, a condenser and an expansion valve; and
a heat recovery system for recovering heat from the milk or product, the heat recovery system comprising first and second heat reservoirs,
in which during operation in the first mode, the refrigeration system is configured to cool the milk and at least some of the recovered heat is stored in the first heat reservoir, and
in which during operation in the second mode, the first heat reservoir is configured to provide heat to the evaporator, and the second heat reservoir is configured to receive heat from the condenser for subsequent use in the process.

The invention is described below with reference to milking operations or processes in a dairy or on dairies (that is dairy farms). However, whilst this is preferred, the invention is not intended to be limited to chilling and heat recovery from specific products or at specific facilities.

Advantageously, the heat management system can function as a chiller during milking times and a high temperature heat pump outside of milking times. This is in comparison to traditional heat recovery systems which heat water to a relatively high temperature during milking. It can be used on a relatively small farm (dozens or hundreds of cows) or a relatively large farm (thousands or tens of thousands of cows), for example. The high energy demand on the national grid or on a power source during milking times can be substantially reduced via the invention. Furthermore, the energy reduction is provided by a relatively low cost system which is more accessible compared to other energy saving systems available to dairy farms. For example, the system is cheaper than heat pumps on the market while also improving energy efficiency. The system provides improved energy efficiency at a lower cost.

The term heat reservoir(s) may be taken to mean units suitable for storing thermal energy. The heat reservoir(s) may include conduits for providing heat to the heat reservoir(s) and for transferring heat from the heat reservoir(s).

Preferably, the heat reservoir(s) may include or be provided by water tanks. The heat may be stored in the reservoirs by storing the heat in the water. That is, the water acts as a heat reservoir, and may be contained using various containment means (which may or may not be insulated). For example, the heat reservoirs may be unvented water tanks. Unvented water tanks are preferable for minimising heat loss.

The system comprises a refrigeration system which is operated in at least two modes. The applicant considers the operation of the system in at least two modes to be one of the core features of the system. The system may operate in either the first mode or the second mode at a given time.

The system may operate in the first mode during milking time(s), in which the milk produced by cows and supplied to the system is cooled to below ambient temperatures. The heat that is released by / recovered from the warm milk can be stored in the first heat reservoir.

During the second mode, the heat recovered during the first mode can be transferred to the second heat reservoir. The refrigeration system heats the water in the second heat reservoir during operation in the second mode. In other words, a second refrigeration system may not be required to heat the water, thereby limiting the overall size of the system and the capital costs compared to other waste heat recovery options.

During the first mode, the refrigeration system may be considered to be a chiller which performs heat recovery. During the second mode, the refrigeration system may be considered to be a high temperature heat pump.

The system may achieve all of the milk cooling and water heating requirements of a dairy farm. The system may provide a complete solution for milk cooling and water heating.

The second mode may be operated just before the first mode. Put another way, the second mode may be used to prepare the system for operation in the first mode. Preferably, the second heat reservoir contains water that may be used for washdown purposes.

The water inside the second heat reservoir may be considered a thermal battery. The second heat reservoir is charged during the second mode and at least partially discharged during washdown, for example.

The temperature of this water may be raised by the heat management system. In other words, no additional heating system is required to heat the water in the second heat reservoir. It will be appreciated that the benefits of the invention can be achieved using a different type of heat reservoir. For example, heat may be stored using a PCM (phase-change material) or wood briquettes, although other types of heat reservoir are also contemplated.

By using a system operating in either of at least two different heat transfer modes, rapid cooling can be prioritised during the first mode while retaining a source temperature which is a higher grade of heat for use in the second mode. This overcomes the need for having two separate systems with conflicting goals.

For example, the reduction of the heat sink temperature (e.g. water from the first heat reservoir) during the first mode increases the cooling output. The increase in cooling output may reduce the power and size requirements of the refrigeration system. This therefore reduces the overall size of the system. For example, instead of requiring a 30 kW unit operating with an evaporation temperature of -7°C and condensing temperature of 60°C, a 30 kW unit operating with an evaporation temperature of 0 or -1°C and a condensing temperature of 30-35°C may be used. This may result in reduction of size of the unit of approximately 40%. A reduction of size may result in a reduction in cost.

The system is straightforward to install and may be retrofitted to an existing system, such as a milk processing system. Suitable pipeline/conduit changes can be included as needed to achieve the necessary connections/fluid flow.

The system can be scaled in size to accommodate dairies of different sizes and the relevant hot water requirements. Adjusting the size of the system for a farm can be straightforward. The size of the system can be scaled to the size of the farm (e.g. milk production). The dairy farmer could scale the size of the system themselves. This provides a lower barrier of entry compared to conventional waste heat recovery systems. In other words, due to the significant reduction in implementation challenges compared to alternative systems, such as milk refrigeration heat recovery systems or waste heat recovery heat pumps, the system may be easily retrofitted into an existing set-up.

A further advantage of the present invention is that the system uses conventional refrigerants. In comparison, waste heat recovery heat pumps which require specialist knowledge and specialist high temperature refrigerants. The use of conventional refrigerants and a conventional refrigeration system reduces the barrier to entry.

The term chilling is not intended to be limited to a particular temperature range. The term chilling should be taken to mean a reduction in temperature relative to an initial temperature.

Optional features of the invention are discussed below.

### First mode

During operation of the first mode, the first heat reservoir may be configured to receive at least some heat from the condenser for heating the water from a first temperature to a first elevated temperature. This allows heat to be recovered from the condenser.

A condensing temperature of the condenser when operating in the first mode may be between 25 to 40°C. This is an optimum or preferred temperature range for chilling the milk. The priority during the first mode may be to chill the milk or product and so the condensing temperature may be kept relatively low, allowing for more efficient, quicker and cheaper milk chilling.

The heat management system may comprise a fan or fan coil unit for reducing the temperature of the first heat reservoir.

The heat management system may be configured to maintain the condensing temperature to a particular temperature. The temperature may be adjusted. To maintain the condensing temperature, excess heat may be discharged to the first heat reservoir or discharged elsewhere using a fan or fan coil unit.

The maintenance of the condensing temperature may depend on the ambient temperature e.g. the external air temperature in the vicinity of the system.

The following two conditions may be used to determine activation of the fan to discharge the excess heat:
1) The temperature of the water flowing past the condenser may be > ambient temperature + 10°C; and/or
2) The condensing temperature may be > 35 degrees or > the ambient temperature + 10°C.

This may ensure that the condensing temperature does not exceed a set value, ensuring high chiller efficiency at high ambient temperatures. For example, the condensing temperature may be maintained below 30°C when operating in the first mode.

The first condition may also ensure efficient subcooling due to ensuring cold water enters the system (based on ambient temperature). This ensures high cooling output and/or efficiency. This is also facilitated by the single pass heat exchanger. This also ensures the condensing temperature is maintained below 35°C.

The condensing temperature may be maintained by a suitable control device as described below.

The first and/or second heat reservoirs may be sized to ensure that sufficient heat can be collected under normal operating conditions.

The refrigeration system may include a first stage plate cooler for cooling the milk or product from about 35 °C to 15-25 degrees. The first heat reservoir may be thermally connected to the first stage plate cooler for recovering at least some of the heat from the first stage plate cooler. This may allow the first heat reservoir to recover heat in addition to or as an alternative to the condenser.

The heat management system may comprise a third heat reservoir. The third heat reservoir may comprise two water tanks.

A fixed volume of water may be cycled between the first stage plate cooler and third heat reservoir. That is, there may be a closed circuit of water which flows between those components.

The water tanks of the third heat reservoir may have a combined volume which is substantially the same as the milking capacity of the farm during each milking session. In other words, the first stage plate cooler may run at a 1:1 ratio of cooling water to warm milk. For example, if the capacity is 5000 litres, then two tanks each of 2500 litres capacity may be provided. These volumes are exemplary only and may be scaled up or down for a given system.

Water may enter the first stage plate cooler at approximately 10 to 15°C. The water may rise to a temperature of approximately 30°C as the milk cools. For example, if the capacity is 5000 litres, then 2500 litres of cooling water may raise to a temperature of at least 30°C.When operating in the first mode, at least some heat from the first stage plate cooler may be transferred to the third heat reservoir.

In other words, at least some heat recovered from the condenser may be stored in the first heat reservoir. At least some heat recovered from the first stage plate cooler may be stored in the third heat reservoir.

External water, such as cold mains water, may pass through the condenser and act as a heat sink. This may assist more efficient condensing and can be ideal where any or all of the following apply: water supply is not an issue, heating demand is low and can be met by heat recovered from another source such as the first stage plate cooler, power supply is an issue, and/or a reduced system size (and reduced upfront investment) is desired. This may also allow for a system of a reduced size and cost. Heated mains water may then be sent to the cows for drinking purposes, for example. External water may be used as an alternative to, or in addition to, water from the first heat reservoir.

In other words, where there is a high heating demand, heat recovered from the first stage plate cooler can act as a heat source during operation of the second mode in addition to the first heat reservoir. Where heating demand is low, then cold external water can help maintain a low condensing temperature of approximately 20 to 25°C, further increasing efficiency of the milk chilling.

Using water from the first heat reservoir is advantageous where water supply is an issue and/or heating demands are higher. For example, heating demands may be higher where heat is used for pasteurisation or for heating farm and/or office buildings. In other words, when the heating demand is higher, one or both of the first heat reservoir and third heat reservoir may act as a thermal store. During operation of the second mode heat can be supplied by one or both of the first heat reservoir and third heat reservoir. The selection of where the heat is supplied from may be based on the temperature of each heat reservoir. The heat reservoir at a higher temperature may be selected to supply heat over the heat reservoir at a lower temperature.

External water, such as cold mains water, may pass through the first stage plate cooler and as well as the heat sink. This may ensure more efficient chilling because the condensing temperature may be kept low and can be ideal where water supply is not an issue and/or the heating demand is lower.

The refrigeration system may comprise a second stage plate cooler for receiving heat from the milk or product. When operating in the first mode, at least some heat from the first stage plate cooler may be transferred to the first heat reservoir, third heat reservoir, and/or to the cows drinking water.

At least some of the heat may be recovered from used washdown water (i.e. water used for dairy washdown which has subsequently cooled). The washdown water may pass through the milk line. The used washdown water may be directed to the second stage plate cooler. The second stage plate cooler may recover heat from the used washdown water. At least some of the heat recovered from the washdown water may be transferred to the first heat reservoir or a third heat reservoir.

The heat reservoirs may be considered to provide a modular system. That is to say the size and/or number of heat reservoirs may be tailored to the requirements of the farm.

The first temperature may be between 1 to 35°C. The first temperature may be dependent on the ambient temperature. For example, the first temperature may be higher than 35°C if the ambient temperature is relatively high and/or the heating demand is low. The first elevated temperature may be approximately 40°C.

The refrigeration system may provide cold water at the evaporator for instant milk cooling, and/or for producing ice for an ice bank, and/or for supplying bulk tank refrigeration.

During the first mode, the average or bulk temperature of the water in the second heat reservoir may be greater than the temperature of the water in the first heat reservoir.

During operation of the first mode, the average or bulk temperature of the water in the second heat reservoir may be at least 75°C.

### Second heat reservoir discharge

The heat management system may be or include an open circuit. In other words, during use, water may be removed from one or both of the heat reservoirs for a variety of uses. For example, the first and/or second heat reservoirs may provide one or more of: warm water for the cows (about 25°C), calves feed (about 40°C), room heating or farmhouse heating (about 55-65°C), bulk tank wash (about 70°C), pasteurisation (about 75°C), and dairy washdown (about 85°C). Water of different temperatures can be provided by a mixing valve. The first and second heat reservoirs may behave as single vessels during water discharge. The first and second heat reservoirs may behave as two individual vessels during the first and second mode.

In particular, the second heat reservoir may be configured to hold or contain water at a temperature of at least about 70°C for bulk tank cleaning or preferably at least 85°C for dairy washdown purposes. During use, at least some water may be discharged from the second heat reservoir for dairy washdown purposes between operating in the first and second mode.

Advantageously, water can be used immediately after milking for washdown purposes because further heating may not be required. The second heat reservoir may be fluidly connected to the first heat reservoir for receiving water from the first heat reservoir. The first heat reservoir may be fluidly connected to a lower half or lower end of the second heat reservoir.

The first heat reservoir may have a larger internal volume or water-holding capacity for holding the water than an internal volume or water-holding capacity of the second heat reservoir. In other words, the first heat reservoir may contain more water than the second heat reservoir. For example, the internal volume of the first heat reservoir may be at least twice as large as the internal volume of the second heat reservoir.

The water discharged from the second reservoir may be replaced by warm water from the first heat reservoir. This means that, during use, the water in the lower half of the second heat reservoir may be at least 40°C.

The temperature of the water at the top of the heat reservoir may be higher due to thermal stratification.

The temperature of the water at or near the top of the second heat reservoir may remain greater than 70°C following the discharge of water for washdown purposes. In other words, hot water may be available at all times. This is advantageous because water at 70°C is required for bulk tank cleaning (i.e. cleaning the milk tank once the milk has been collected and the milk tank has been emptied). The time at which the milk is collected, and the milk tank is emptied may be unpredictable. The system may ensure water at 70°C is available when milk is collected.

The water discharged from the first heat reservoir may be replaced by external water such as mains water. The external water may have a temperature of about 10 to 20°C.

Where the first heat reservoir has a volume greater than the second heat reservoir, the water at the top of the first heat reservoir may be approximately 40°C due to thermal stratification.

The temperature of the second tank may be raised back to at least 85°C during operation in the second mode.

### Second mode

Operation in the second mode may be initiated by a suitable control device or system (optionally with suitable sensor(s)) according to the temperature of one or more of the heat reservoirs or by a set time. The control device may control one or more PICVs (Pressure Independent Control Valve) and/or at least one 3-way solenoid valve for controlling flow direction of the water and/or refrigerant.

If the set time is insufficient and/or the evaporation temperature goes below a set value, the system may recognise that more heat is required. The set value may be 20°C. The system may adjust the condensing temperature during the next time it operates in the first mode to ensure enough heat is recovered. For example, the condensing temperature may be increased by 2 to 3°C. Operation in the second mode may be initiated when the system is not operating in the first mode. Preferably it is timed to start just before the milking, to prevent heat loss

When operating in the second mode, at least some heat recovered from one, some or all of the condenser, the first stage heat reservoir and the second stage heat reservoir during the first mode is transferred to the evaporator.

Where multiple sources of recovered heat are provided, the selection of the heat source may be dependent on which heat reservoir contains the most stored heat, and/or the hot water demand, and/or which source is the most efficient.

In other words, selection of the heat source may be dependent on the grade of heat available in each heat reservoir. For example, the heat reservoir at the highest temperature may act as the heat source first to attain 85 degrees. Further heat sources may then be selected.

The system may offer versatility with the ability to use at least some heat from one or more of the first heat reservoir, first stage plate cooler, and second stage plate cooler.

Using heat from multiple heat sources is ideal where there is significant heating demand, for example in larger dairies where they are pasteurising the milk or are requiring heating for office buildings, barns and/or farmhouses.

Water from the second heat reservoir may be transferred to the condenser for recovering heat from the condenser (which may be done via desuperheating). In other words, at least some heat from one, some or all of the heat sources may be transferred to the second heat reservoir via the refrigeration system.

The refrigeration system may comprise a water line and a refrigerant line. The water from the second heat reservoir may pass through the water line. The refrigerant line may comprise a working fluid. The refrigeration circuit may operate as a single pass heat exchanger. In other words, the refrigeration circuit may operate at a fixed condensing temperature.

The refrigerant line may form a refrigeration circuit through the evaporator, compressor, the condenser, and the expansion valve.

The refrigerant line may include a first subcooler and/or a second subcooler.

The condenser may be connected to the first subcooler.

The first subcooler may be connected to the condenser and second subcooler.

The second subcooler may be connected between the first subcooler and expansion valve and/or between the evaporator and compressor.

The water line may comprise a water inlet and a water outlet.

The water line may comprise the first subcooler and condenser.

The water inlet may be connected to the first subcooler.

The first subcooler may be connected to the condenser.

The condenser may be connected to the water outlet.

The second subcooler may be a liquid suction gas heat exchanger. The second subcooler may optimise the evaporator and allow for subcooling of the refrigerant.

The refrigeration system may comprise the suitable control device or system.

A condensing temperature of the condenser when operating in the second mode may be at least 70°C. The condensing temperature may be approximately 70°C. A high condensing temperature can allow for greater discharge superheat recovery along with highest possible subcooling and so more efficient heat transfer. A high condensing temperature is required to heat water to a higher temperature. The system tries to keep the lowest condensing temperature whilst aiming to heat the water to the desired temperature.

The desired water outlet temperature may determine the condensing temperature setting. Colder water entering the condenser may allow for a lower condensing temperature due to the higher temperature gradient. This may result in lower flow rates and higher discharge superheat recovery and higher subcooling as a result. Where that is not possible, the condensing temperature may adjust itself to a temperature whilst ensuring that it remains within the safe operation limit. The safe operation limit may be determined through the discharge temperature being lower than 107°C.

The evaporation temperature of the evaporator when operating in the second mode may be at least 25°C. An evaporation temperature of the evaporator when operating in the second mode may be between 20 to 40°C. Operating the evaporator at this temperature can result in a high suction pressure and improved efficiency of the refrigeration system.

A high evaporation temperature may ensure a low pressure ratio of approximately 7:1 discharge to suction. This may allow the system to operate within safe limits and may ensure longevity of the equipment.

At around a condensing temperature of about 75°C, the above arrangement of the refrigeration circuit may raise the temperature of the water from the second heat reservoir in the water line to between 80°C to 95°C by superheat recovery.

The heat recovery may be facilitated by a large difference in temperature between the temperature of the water and the condensing temperature. The heat recovery may be facilitated by a low flow rate of the water through/past the condenser. The low flow rate may be controlled and/or facilitated by the one or more PICVs.

The condenser may comprise a PICV. The condenser PICV may control the discharge temperature and/or pressure. The condenser PICV may control the temperature of the water leaving the condenser based on incoming water temperature. The condenser PICV may control the condenser flow rate.

The condenser PICV may identify the point at which a maximum water temperature can be maintained and/or a maximum discharge superheat can be recovered. For example, if the optimal desired temperature is 85°C and maximum allowed discharge temperature is 107°C, then the system can maintain the discharge pressure at the lowest possible optimal level to ensure that discharge temperature is below 107°C whilst hot water out of the condenser is still 85°C. The parameters may be (re-)adjusted if a higher water temperature is desired.

The evaporator may comprise a PICV. The evaporator PICV may control the evaporation pressure and facilitate superheating by ensuring a high temperature difference is maintained through the heat exchanger. The evaporator PICV may control the evaporator flow rate.

The evaporator PICV may ensure that the water flow through the evaporator is regulated under all circumstances. The optimal temperature difference through the evaporator may be 10°C. If the temperature difference is substantially lower than 10°C the PICV may close and reduce the water flow. If the temperature difference is substantially higher than 10°C the PICV may open and increase the flow. This is especially useful in the summer when higher flow rates may also be desired.

The PICVs may ensure the reliability of the equipment. For example, the low discharge temperature and the increased evaporation temperature during the second mode may maintain oil flow in the system, keeping the system lubricated. Conventional refrigeration equipment and high temperature heat pumps often fail due to poor lubrication which is linked to a high discharge temperature.

The flow direction of the water may be controlled by the one or more solenoid valves. For example, flow directions may be altered between the first and second modes.

The second mode may operate for a set time or until predetermined criteria are met. For example, a condition may be that at least 70% of water in the second heat reservoir must have reached at least 70°C.

The system may monitor the temperature of the washdown water through a plate cooler sensor. If after operating in the first mode, the water used for washdown is less than 50°C, the system may adjust the time it operates in the second mode. For example, if the temperature of the water used for washdown is 48°C, then the system may increase the second mode operating time by 30 minutes. If the temperature of the water used for washdown is less than 45°C then the system may increase the second mode operating time by 60 minutes.

The refrigeration system may comprise a single refrigeration circuit.

### First heat reservoir cooling system

The heat management system may comprise a first heat reservoir cooling system (or heating / cooling system) for reducing the temperature of the water in the first heat reservoir. The cooling system may comprise a fan or fan coil unit. The cooling system may operate via dry cooling.

In cases where there are thermal imbalances in cooling and heating loads, the cooling system may be activated to ensure the condensing temperature is kept low and cooling output is maintained.

The heat management system may operate the cooling system prior to operating in the second mode. The heat management system may operate the first heat reservoir cooling system prior to operating in the first mode.

The cooling system may operate during a delay period after operating in the first mode. For example, in a typical dairy with 12 hours in between milking this delay period may be approximately nine to ten hours. Throughout this delay period, the system may perform a check to determine the temperature of the first heat reservoir compared to the ambient temperature. The heat management system may perform a selection on the basis of the ambient temperature. For example, if the ambient temperature is greater than 15°C and the first heat reservoir temperature is more than 35°C, then the system may operate the cooling system prior to operating in the second mode. This allows the temperature to be reduced prior to operating in the first mode ensuring an optimum amount of heat may be recovered during the first mode. The condensing temperature can be kept to a minimum for the next milking mode. This further benefits the subcooling process. The cooling system may operate until the first heat reservoir is approximately 30°C or ambient temperature + 10°C.

If the ambient temperature is lower than 15°C, then the heat management system may operate in the second mode first to try to achieve the highest possible source temperature during the second mode. The cooling system may be configured to operate after the second mode is completed.

The cooling system may be activated if the ambient temperature is less than the first heat reservoir temperature by more than 10°C. In other words the cooling system may run to cool the tank further if the ambient conditions allow it to do so. Therefore, the cooling system may be activated before operating in the first mode. This is to assist with cooling the first heat reservoir prior to operation in the first mode. A lower temperature in the first mode may be advantageous for ensuring optimum heat recovery.

The cooling system may also be activated during the first mode if the water returning entering the condenser is higher than a set temperature. For example, the set temperature may be the ambient temperature + 10°C. This is to ensure maximum subcooling.

If the cooling system is activated before operating in the second mode, then the cooling system may run until the temperature of the first heat reservoir reaches a temperature of about 30°C or a temperature which is 10°C greater than the ambient temperature. 10°C is the exemplary optimum temperature difference for cooling system performance.

Where cooler water is required from the first heat reservoir, for example, during first mode, the cooling system may be activated earlier than noted above.

At least some heat may be recovered and/or utilised from the cooling system. For example, heat redistributed by the fan may be used to heat buildings. Conversely, the cooling system may be able to recover heat from air for heating the first and/or second heat reservoir. This may be especially advantageous during the summer where the air is warmer, and less milk is produced due to calving. In other words, the system may operate as an air source heat pump (and in another aspect there may be an air source heat pump comprising a system according to this first aspect).

The cooling system may recover heat from the air (i.e. operate as a heat pump) if during the operation of the second mode, the water returning to the evaporator falls below a set value. For example, the set value may be the ambient temperature - 5°C. The heat recovered from the air may be used to heat the water entering the evaporator.

Advantageously, the cooling system may be operated as a chiller, an air source heat pump, and/or a high temperature heat pump.

The third reservoir may comprise a cooling system for the third reservoir. The third reservoir cooling system may have any feature or combination of features of the first reservoir cooling system.

According to a second aspect of the present invention, there is provided a method of retrofitting a heat recovering system to a refrigeration system to provide a heat management system for chilling milk, the refrigeration system comprising a compressor, an evaporator, an expansion valve, a condenser, and a working fluid, the method comprising the steps of:
thermally connecting the heat recovery system to the refrigeration system for recovering the heat from the milk or product, the heat recovery system comprising first and second heat reservoirs each for holding water,
in which the first heat reservoir is thermally connected to the evaporator for transferring heat to the evaporator, and in which the second heat reservoir is thermally connected to the condenser for receiving heat from the condenser, and
configuring the system(s) to operate in a first mode, in which the refrigeration system cools the milk and the first heat reservoir recovers the heat from the milk or product.

The advantages of the above method are discussed with reference to the first aspect of the present invention.

The second aspect of the present invention may have any feature or independently selected combination of features of the first aspect of the present invention.

According to a third aspect of the present invention, there is provided a heat management system formed by the method of retrofitting of the second aspect of the present invention.

The second aspect of the present invention may have any feature or independently selected combination of features of the first and/or second aspects of the present invention.

According to a fourth aspect of the present invention, there is provided a method of chilling milk, the method comprising the steps of:
reducing the temperature of the milk from an initial temperature to a subsequent temperature which is less than 10°C by using the heat management system of the first or third aspects of the present invention or the heat management system formed by the method of the second aspect of the present invention.

At least a portion of the chilled milk may be transferred to one or more containers to form one or more containers of milk. For example, the chilled milk may be transferred to one or more vats prior to pasteurisation, or to one or more bottles.

According to a fifth aspect of the present invention, there is provided a refrigeration system for use in milk processing, the refrigeration system comprising a water line and a refrigerant line for receiving a working fluid, wherein the refrigerant line comprises a compressor, a condenser, an expansion valve, and an evaporator, as part of a refrigeration circuit, and a first subcooler and a second subcooler in the circuit, in which connections in the refrigerant line providing a flow path for the refrigerant include:
the condenser is connected to the first subcooler;
the first subcooler is connected to the expansion valve via the second subcooler;
the expansion valve connected to the evaporator;
the evaporator is connected to the compressor via the second subcooler; and
the compressor is connected to the condenser;
and wherein the water line comprises a water inlet and water outlet, the first subcooler, and the condenser, in which connections in the water line providing a flow path for water include:
the water inlet is connected to the first subcooler;
the first subcooler is connected to the condenser; and
the condenser is connected to the water outlet.

Advantages of the refrigeration system are discussed with reference to the first aspect of the present invention.

The refrigeration system may have any feature or independently selected combination of features of the first, second and/or third aspects of the present invention.

The heat management system of either or both of the first and third aspects of the present invention may comprise the refrigeration system of the fifth aspect of the present invention.

The refrigeration system may be provided as part of a refrigeration unit. That is, it may be provided as a self-contained device that can be fitted to or integrated more easily into an existing system. The refrigeration unit may comprise the refrigeration system disposed inside a housing in which the housing comprises connection means for connecting the refrigeration unit to a water source.

The refrigeration unit may comprise a suitable control device or system (optionally with suitable sensor(s)) according to the temperature of one or more of the heat reservoirs or by a set time. The control device may control one or more PICVs (Pressure Independent Control Valve) and/or at least one 3-way solenoid valve for controlling flow direction of the water and/or refrigerant. The control device may run one or more of the first mode and second mode. The control device may control the cooling system(s). The control device may control one or more of the optimal discharge pressure, discharge temperature, oil control and other compressor related parameters for ensuring reliability of the system.

The control device may be configured to control the systems described above. For example, the control device may be linked to one or more sensors which may be used to decide when to operate the systems in order to operate in the most efficient manner. This may include, operation of the modes and systems described above according various criteria, selection of the most efficient heat sources during operation in the second mode, selection of where heat is recovered from during the first mode and/or operation of the cooling system to ensure maximum heat recovery during one or both of the first and second mode. According to a sixth aspect of the present invention, there is provided a method of installing first and second subcoolers to an existing refrigeration system to provide a refrigeration system according to the fifth aspect of the present invention.

According to a seventh aspect of the present invention, there is provided milk, or one or more containers thereof, processed by the method according to the fourth aspect of the present invention.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a schematic of a first heat management system according to the present invention;
Figure 2 shows the first and second reservoirs of Figure 1 prior to operating in the first mode;
Figure 3 shows the first and second reservoirs of Figure 1 after the operating in the first mode stage;
Figure 4 shows the first and second reservoirs of Figure 1 as water is being discharged from the second reservoir;
Figure 5 shows a schematic of a refrigeration system according to the present invention;
Figure 6 shows a schematic of a second embodiment of heat management system according to the present invention;
Figure 7 shows a schematic of a third embodiment of heat management system according to the present invention; and
Figure 8 shows a schematic of a fourth embodiment of heat management system according to the present invention.

### DESCRIPTION OF PREFERRED EMBODIMENTS

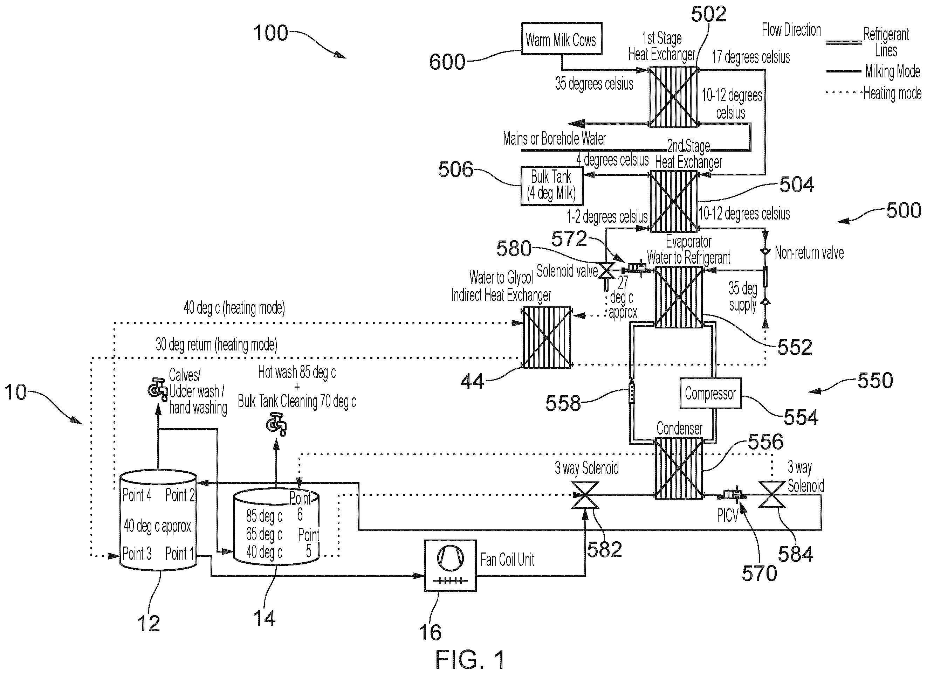

Referring firstly to Figure 1, a schematic of a heat management system according to the present invention is generally shown at 100. The heat management system 100 includes a refrigeration system 500 for chilling milk 600, and a heat recovery system 10 for recovering heat from the milk 600.

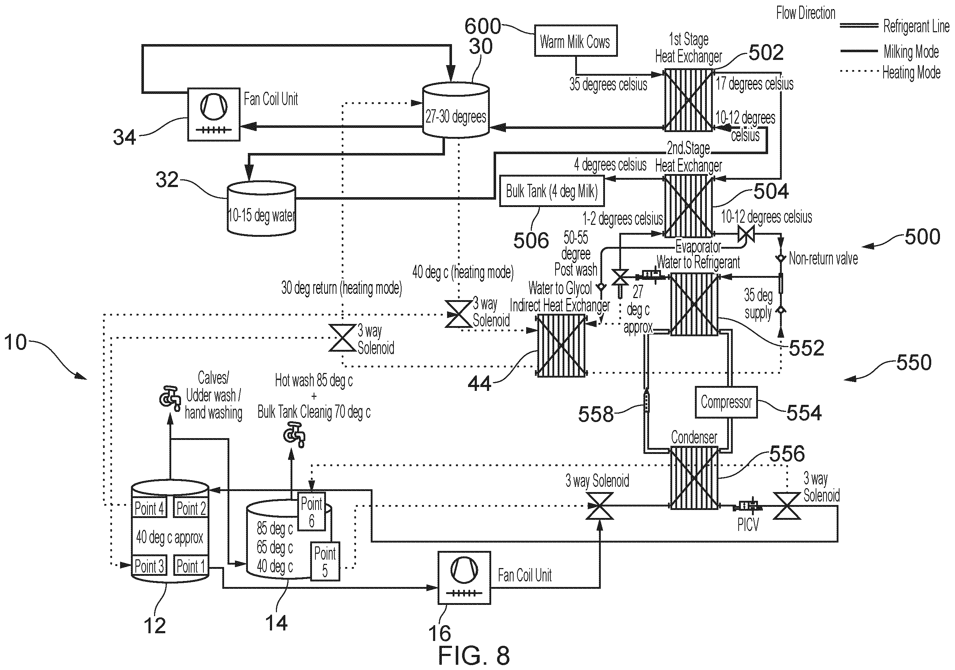

The refrigeration system 500 includes first and second stage plate coolers 502, 504, and a refrigeration circuit 550, and an integrated heat exchanger. The refrigeration circuit 550 is discussed in more detail below with respect to Figure 8. The refrigeration circuit 550 includes an evaporator 552, compressor 554, condenser 556 and expansion valve 558.

The heat recovery system 10 includes a first heat reservoir 12 and a second heat reservoir 14. The first and second heat reservoirs 12, 14 may be considered as water tanks each with an internal volume for containing water. The internal volume of the first reservoir 12 is about twice as large as the internal volume of the second heat reservoir 14 in this embodiment.

The heat recovery system 10 is thermally coupled to the refrigeration system 500. In particular, the first heat reservoir 12 is thermally coupled to the evaporator 552 for transferring heat to the evaporator 552. The first and second heat reservoirs 12, 14 are thermally coupled to the condenser 556 for receiving heat from the condenser 556.

The heat management system 100 can operate in a first mode which may be considered a milking or milk chilling mode. During the first mode, milk 600 is chilled, and heat is recovered from the chilled milk 600. Flow direction in the first mode is depicted with solid lines.

The heat management system 100 can operate in a second mode which may be considered a heating mode. During the second mode, heat recovered during the first mode is used to heat water in the second heat reservoir 14 for subsequent use (e.g. in another instance of operation in the first mode). Flow direction in the second mode is depicted with dashed lines.

### First mode

The first mode operates as follows. Warm milk 600 enters (e.g. by pumping) the refrigeration system 500. The warm milk 600 passes through a first stage plate cooler 502. The temperature of the milk 600 is reduced from around 35°C to around 17°C. The warm milk 600 then passes through a second stage plate cooler 504. The warm milk 600 cools further from about 17°C to about 4°C. The chilled milk 600 is stored in a storage tank 506 for subsequent pasteurisation or bottling.

During the milk chilling process, the second stage plate cooler 504 is cooled by a refrigeration circuit 550. The evaporator 552 cools the second stage plate cooler 504, thereby releasing the heat at the condenser 556 for recovery by the heat recovery system 10.

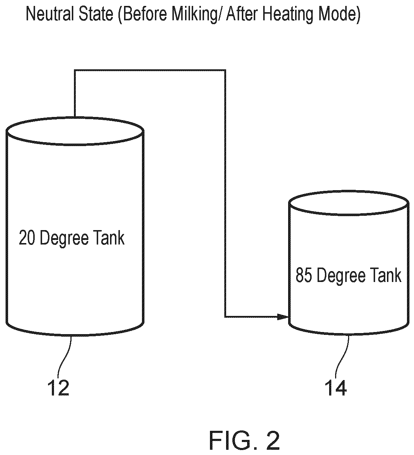

Figure 2 shows the first and second heat reservoirs 12, 14 prior to operation of the first mode. Prior to operating in the first mode, the water in the first and second heat reservoirs 12, 14 have a temperature of approximately 20°C and 85°C, respectively.

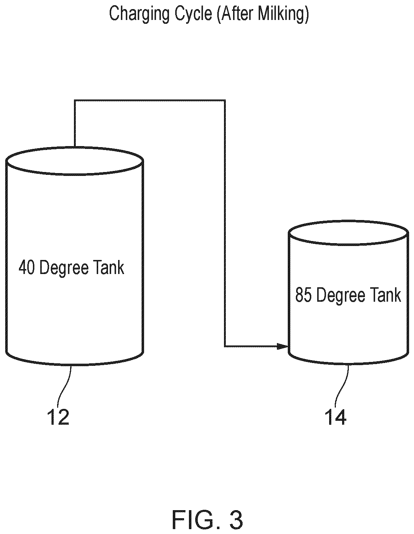

Figure 3 shows the first and second heat reservoirs 12, 14 after operation of the first mode. During operation of the first mode, the first heat reservoir 12 receives the heat from the condenser 556, raising the temperature from approximately 20°C to 40°C.

During operation in the first mode, the milk 600 may be considered a heat source. The first heat reservoir 12 may be considered as a heat sink.

During operation in the first mode, the condensing temperature is approximately 30 to 35°C.

In the first mode, the temperature of the water in the second heat reservoir 14 is substantially unchanged. That is to say, heat is not transferred to or from the second heat reservoir 14 as part of operation of the heat management system 100; however, there may be natural radiation of heat from the second heat reservoir 14, for example.

A significant advantage of the first mode described above is that heat can be recovered from the milk 600 while maintaining a low condensing temperature for efficient cooling.

### Second heat reservoir discharge

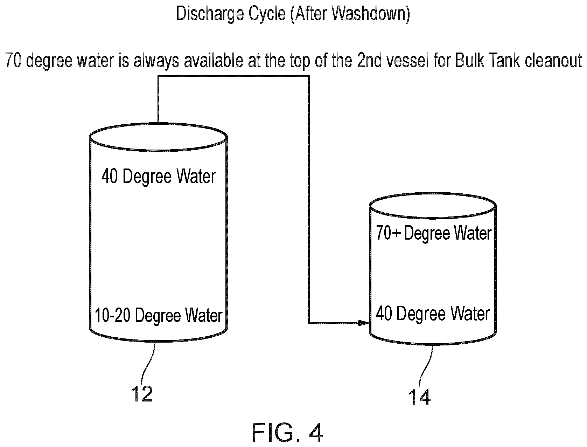

Referring now to Figure 4, water may be discharged from the second heat reservoir 14. Water at a temperature of 85°C may be discharged after operating in the first mode. The water is typically used following the milking process for dairy washdown purposes. That is, the water may be used to clean and/or sterilise any conduit(s) and/or vessel(s) in which or through which milk passes, after the milking phase (i.e. when those conduit(s) and vessel(s) substantially do not contain the milk that has been processed in that phase.

The first and second heat reservoirs 12, 14 are fluidly connected. The first heat reservoir 12 is fluidly connected to a bottom portion of the second heat reservoir 14. The first heat reservoir 12 is configured to receive water from the first heat reservoir 12 to the second heat reservoir 14 to replace the discharged water. It is a pressurised system further reducing heat loss and therefore can operate on mains pressure.

The water replaced by the first heat reservoir 12 is at a temperature of about 40°C. This ensures the water at the bottom of the second heat reservoir 14 is at least 40°C.

The water in the first heat reservoir 12 is replaced by mains water. The mains water typically has a temperature of between 10 to 20°C. Due to the relatively large volume of the first heat reservoir 12 and thermal stratification, the temperature of the water at or near a top of the first heat reservoir 12 is approximately 40°C.

Similarly, due to thermal stratification, the temperature of the water at or near a top of the second heat reservoir 14 is approximately 70°C. This ensures hot water is available in the second heat reservoir 14.

### Second mode

The second mode operates outside of milking times, ideally just before milking to drain at least some of the heat from the first heat reservoir 12.

Referring again to Figure 1, the second mode operates as follows. Recovered heat from the first heat reservoir 12 is sent to the evaporator 552 via a heat exchanger 44. Water from the second heat reservoir 14 is sent to the condenser 556 to recover heat.

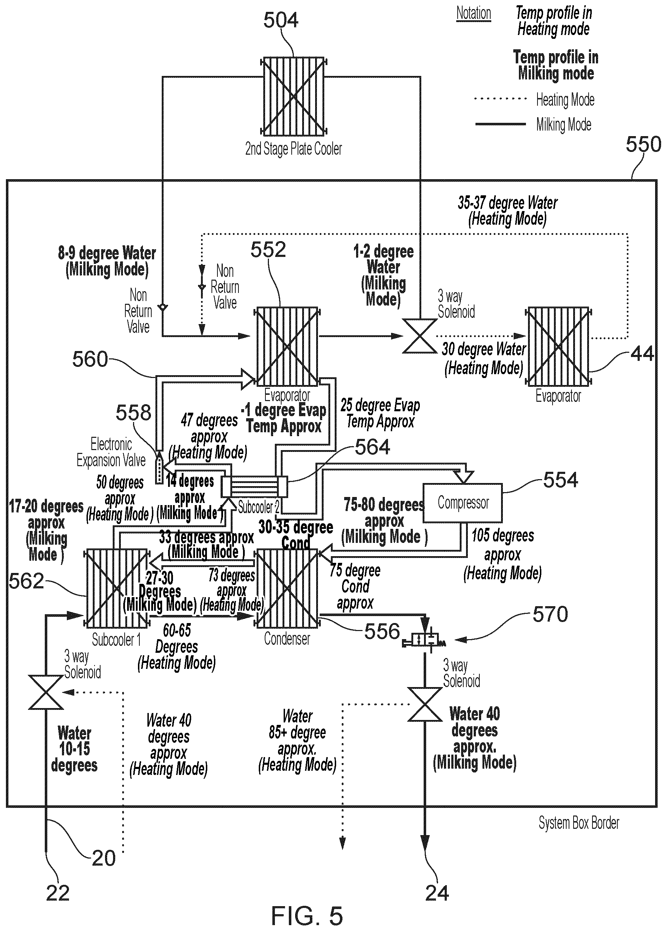

During operation of the second mode, the recovered heat from the first heat reservoir 12 may be considered a heat source. The second heat reservoir 14 may be considered as a heat sink. The heat source is switched from the second stage plate cooler 504 to the first heat reservoir 12, e.g. by the use of a solenoid valve. The refrigeration circuit 550 of the refrigeration system 500 is best shown in Figure 5. In this embodiment, the refrigeration system 500 includes a refrigerant line 560 and a water line 20. Exemplary temperatures of fluids at each stage are shown.

The refrigerant line 560 forms the refrigeration circuit 550. The refrigeration circuit 550 includes first and second subcoolers 562, 564. The second subcooler 564 is a liquid suction gas heat exchanger. The first subcooler 562 is disposed between the condenser 556 and the expansion valve 558. A first side of the second subcooler 564 is disposed between the first subcooler 562 and the expansion valve 558. A second side of the second subcooler 564 is disposed between the evaporator 552 and the compressor 554.

The second subcooler 564 optimises the evaporator 552 and subcools the refrigerant prior to passing through the expansion valve 558.

The water line includes a water inlet 22, the first subcooler 562, the condenser 556, and a water outlet 24.

During operation of the second mode, water from the second heat reservoir 14 enters the water inlet 22. The water passes through the first subcooler 562 to heat the water and cool the refrigerant. The water then passes through the condenser 556 where desuperheating and condensation occurs, further raising the temperature of the water in the water line 20. The heated water exits the water line 20 at the water outlet 24 and is sent to the second heat reservoir 14. This allows the water in the second heat reservoir 14 to be heated to temperatures higher than the condensing temperature.

During operation of the second mode, the evaporation temperature is approximately 25°C. During operation of the second mode, the condensing temperature is approximately 75°C. These temperatures facilitate the recovery of high-grade energy in the water.

A significant advantage of the second mode described above is that the heat recovered from the milk 600 can be transferred to the second heat reservoir 14 which may be considered as high-grade energy. Using the above system, the temperature of the water from the second reservoir can be raised to up to 95 to 97°C.

This is facilitated by the single pass heat exchanger nature of the refrigeration system 550 which allows for greater superheat recovery than traditional systems. The heat recovery is facilitated by a large difference in temperature between the temperature of the water and the condensing temperature. The heat recovery can be facilitated by a low flow rate of the water through the condenser 556.

The flow of refrigerant and water is controlled by PICVs 570, 572. A control means controls PICVs 570, 572. The PICVs include an evaporator PICV (572, see Figure 1) and a condenser PICV 570. The PICVs 570, 572 control the flow of the water and refrigerant, optimising the heat recovery.

The evaporator PICV 572 controls the evaporation pressure and flow rate. The evaporator PICV 572 facilitates superheating by ensuring a relatively high temperature difference is maintained through the heat exchanger.

The condenser PICV 570 controls the discharge temperature and pressure and condenser flow rate. The condenser PICV 570 controls the temperature of the water leaving the condenser 556 based on incoming water temperature.

The condenser PICV 570 may identify the point at which a maximum water temperature can be maintained and/or a maximum discharge superheat can be recovered. For example, if the optimal desired temperature is 85°C and maximum allowed discharge temperature is 107°C, then the system 100 will maintain the discharge pressure at the lowest possible optimal level to ensure that discharge temperature is below 107°C whilst hot water out of the condenser 556 is still 85°C. The parameters may be readjusted if a higher water temperature is desired.

The optimal temperature difference through the evaporator 552 may be 10°C. If the temperature difference is substantially lower than 10°C the evaporator PICV 572 may close and reduce the water flow. If the temperature difference is substantially higher than 10°C the evaporator PICV 572 may open and increase the flow. This is especially useful in the summer when higher flow rates may also be desired. This also ensures that the system operates with low superheat for the evaporator, this is advantageous in keeping the discharge temperature to a minimum both in first mode and second mode.

Further, this is advantageous over conventional chillers which suffer with a low evaporation temperature, decreased efficiency and overall poor performance due to very high or unregulated flow through the evaporator. This is especially true for variable speed systems which can regulate their speed to 50% of their usual capacity. Unregulated pumps are sized for max flow, which is usually for the highest capacity of the system (i.e. for operation during summer). During other times the flow rate is too high through the system. This causes the evaporator to operate at very low temperature difference and gaining superheat from the evaporator becomes a challenge. Conventional systems overcome this challenge by having the expansion valve close further, however, this results in a low evaporation temperature and/or a higher discharge temperature

The flow direction of the water may be controlled by the one or more solenoid valves. For example, flow directions may be altered between the first and second modes. In this embodiment, the refrigeration system includes three, three-way solenoid valves 580, 582, 584. The control means controls the solenoid valves 580, 582, 584.

In a preferred embodiment, the refrigeration system 550 is provided as a unit including the control means, PICVs 570, 572 and solenoid valves 580, 582, 584.

By having a single refrigeration circuit 550 operating in two separate modes, the system can prioritise milk chilling in the first mode and high-grade heat recovery in the second mode.

### First heat reservoir cooling system

The heat management system 100 has a first heat reservoir cooling system 16. The cooling system 16 can be used to cool the water in the first heat reservoir 12 or to cool the first heat reservoir (or prevent/mitigate over-heating thereof). This can be advantageous for subcooling.

The cooling system 16 can operate after the second mode has completed. The cooling system 16 may operate before the heat management system 100 operates in the first mode. This can be to discharge heat in the first heat reservoir 12 to ensure maximum heat recovery during the first mode. Ideally the temperature of the first heat reservoir 12 is approximately 10°C or room temperature.

The cooling system 16 can operate after the first mode has completed.

The selection as to whether the cooling system 16 operates is based on the ambient temperature.

In this embodiment, the cooling system 16 is operated after the first mode if the ambient temperature is more than 15°C and/or the heat reservoir temperature is more than 35°C at the top of the heat reservoir.

The cooling system 16 can operate until a specific temperature is reached (e.g. 30°C or the ambient temperature + 10°C). Then the heat management system 100 will activate the second mode.

If the ambient temperature is lower than 15°C, the heat management system 100 operates in the second mode first to ensure the highest possible source temperature during second mode. The cooling system 16 is triggered after heating mode is completed.

The cooling system 16 redistributes heat using a fan. The cooling system 16 may be considered a natural fan cooling mode.

The cooling system 16 can operate at any time cooler water is required from the first heat reservoir 12.

The cooling system 16 can be used in reverse to heat the water by recovering heat from the air. In other words, the cooling system 16 can act as an air source heat pump.

To decide whether the cooling system 16 initiates, the cooling system 16 may compare the time with temperature data for the previous day. Alternatively, a user can manually input a time period for an expected warm period, e.g. 10:00 to 16:00. so the cooling system 16 will aim to run outside of these hours to reduce the temperature of the water in the first heat reservoir 12. If water of a lower temperature is not required, the second mode can initiate without operating the cooling system 16.

### Examples of alternative embodiments

The system is versatile and can be adapted according to the needs of the farm or other scenario as demonstrated by the alternative embodiments described below. Like reference numerals are used to refer to like features.

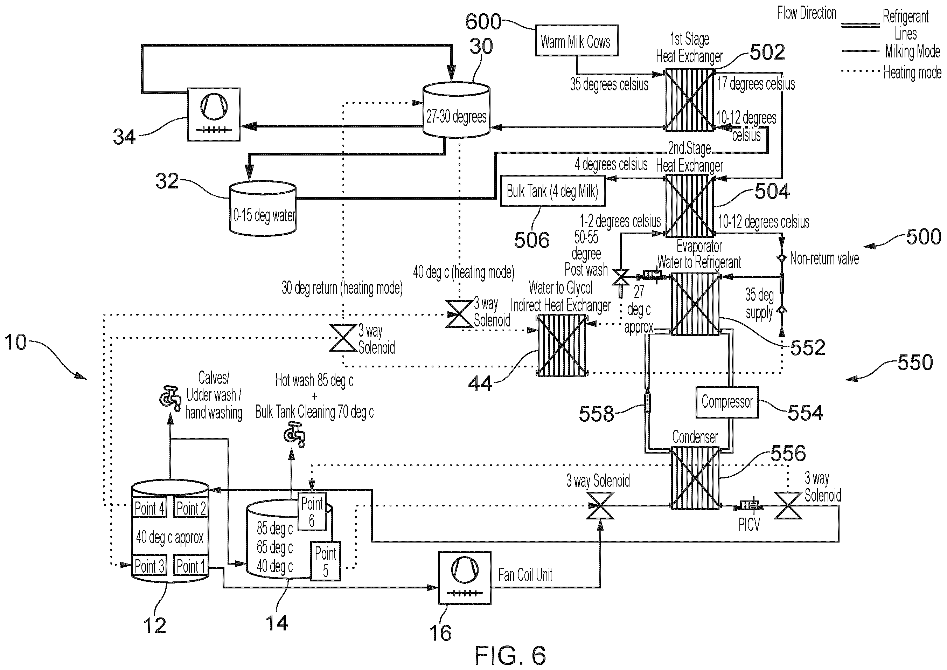

Figure 6 depicts a second embodiment of the present invention. This embodiment is substantially the same as the system above.

In this embodiment, heat is recovered from the first stage plate cooler 502. The system includes a third heat reservoir 30. The heat recovered from the first plate cooler 502 is stored in the third heat reservoir 30. The heat recovered from the second plate cooler 504 can be used as a heat source during the second mode. This can be in addition to or as an alternative to the heat stored in the first heat reservoir 12. The selection of which reservoir is used as the heat source may be based on the heat stored in each reservoir. The third heat reservoir 30 is fluidly coupled to a low temperature water source 32. A second cooling system 34 is provided to cool the water in the third heat reservoir 30 in a similar manner as the cooling system 16 described above.

The system of this embodiment can recover more heat and can be advantageous in a farm with a relatively higher heat demand.

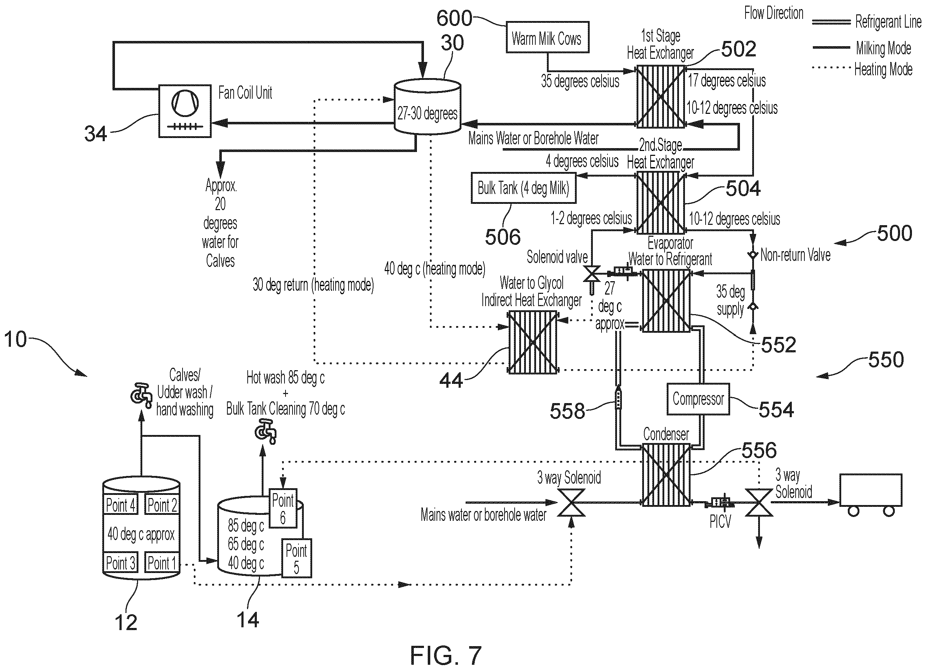

Figure 7 depicts a third embodiment of the present invention. This embodiment is substantially the same as the second embodiment above. However, in this embodiment, heat from the condenser 556 is recovered in mains water 40 flowing through the condenser 556. The heated mains water 40 can be sent to the cows (or a trough or elsewhere). The mains water 40 has a temperature of approximately 10 to 15°C. Chilling the milk 600 using the mains water 40 can be more efficient because the condensing temperature is kept low. This arrangement is particularly advantageous where water supply is not an issue.

In this embodiment, the heat source for the second mode is the heat recovered from the first plate cooler 502.

Figure 8 depicts a fourth embodiment of the present invention. This embodiment is substantially the same as the second embodiment above.

In this embodiment, heat from dairy washdown wastewater 50 is recovered. This water is at a temperature of approximately 50 to 55°C and circulates from the milking line, through the second stage plate cooler 504. The recovered heat is stored in the third heat reservoir 30. As above, the recovered heat can be used as a heat source during the second mode.

The embodiments described above are provided by way of example only, and various changes and modifications will be apparent to persons skilled in the art without departing from the scope of the present invention as defined by the appended claims.

## Claims

1. A heat management system (100) for minimising overall energy use in a process, in which the heat management system (100) is operable in a first mode for chilling milk (600) or another product and recovering heat therefrom, and a second mode for transferring recovered heat through the system (100), the system (100) comprising:
a refrigeration system (500) for chilling the milk (600) or product, the refrigeration system (500) comprising a refrigeration circuit (550) for receiving a working fluid, including an evaporator (552), a compressor (554), a condenser (556) and an expansion valve (558); and
a heat recovery system (10) for recovering heat from the milk or product (600), the heat recovery system (10) comprising first and second heat reservoirs (12, 14),
in which during operation in the first mode, the refrigeration system (500) is configured to cool the milk (600) or product and at least some of the recovered heat is stored in the first heat reservoir (12), and
in which during operation in the second mode, the first heat reservoir (12) is configured to provide heat to the evaporator (552), and the second heat reservoir (14) is configured to receive heat from the condenser (556) for subsequent use in the process.

2. The heat management system (100) as claimed in claim 1, in which the first heat reservoir (12) and second heat reservoir (14) comprise water for storing heat at different temperature gradients, the second heat reservoir (14) being fluidly connected to the first heat reservoir (12) for receiving water from the first heat reservoir.

3. The heat management system (100) as claimed in claim 1 or 2, in which the first heat reservoir is configured to receive heat from the condenser (556) for heating the first heat reservoir (12) from a first temperature to a first elevated temperature, optionally in which the first temperature is between about 1°C to 35°C and/or optionally in which the first elevated temperature is at least approximately 40°C.

4. A heat management system (100) as claimed in any preceding claim, in which during operation in each of the first and second modes, the temperature of the second heat reservoir (14) is at least 70°C.

5. A heat management system (100) as claimed in any preceding claim, in which during operation in the first mode, the temperature of the second heat reservoir (14) is greater than the temperature of the first heat reservoir (12).

6. A heat management system (100) as claimed in any preceding claim, in which an internal volume or water-holding capacity of the first heat reservoir (12) is larger than an internal volume or water-holding capacity of the second heat reservoir (14), optionally in which the internal volume or water-holding capacity of the first heat reservoir (12) is at least twice as the internal volume or water-holding capacity of the second heat reservoir (14).

7. A heat management system (100) as claimed in any preceding claim, in which the first heat reservoir (12) is fluidly connected to a lower half or lower end of the second heat reservoir (14).

8. A heat management system (100) as claimed in any preceding claim, in which a condensing temperature of the condenser (556) when operating in the first mode is between 20°C to 45°C.

9. A heat management system (100) as claimed in any preceding claim, in which a condensing temperature of the condenser (556) when operating in the second mode is higher than the condensing temperature of the condenser (556) when operating in the first mode and preferably approximately 70°C.

10. A heat management system (100) as claimed in any preceding claim, in which an evaporation temperature of the evaporator (552) when operating in the second mode is higher than the condensing temperature of the condenser (556) when operating in the first mode and is preferably approximately 25°C.

11. A heat management system (100) as claimed in any preceding claim, in which the first heat reservoir (12) is thermally connected to a first stage plate cooler (502) of the refrigeration system (500) for recovering heat from the first stage plate cooler (502) for use in the second mode.

12. A heat management system (100) as claimed in any of claims 1 to 10, in which
the refrigeration system (500) comprises a first stage plate cooler (502) for receiving heat from the milk (600) or product, and
during operation in the first mode, at least some heat from the first stage plate cooler (502) is transferred to a third heat reservoir, and
during operation in the second mode, at least some of the heat recovered from the first stage plate cooler (502) is transferred to the evaporator (552).

13. A heat management system (100) as claimed in claim 12, in which
the refrigeration system (500) comprises a second stage plate cooler (504) configured to receive heat from the milk (600) or product, and
during operation in the first mode, at least some heat from the second stage plate cooler (504) is transferred to the first heat reservoir (12) or a third heat reservoir, and
during operation in the second mode, at least some of the heat recovered from the second stage plate cooler (504) is transferred to the evaporator (552).

14. A heat management system (100) as claimed in any preceding claim, in which the refrigeration system (500) comprises a water line and a refrigerant line for receiving a working fluid, wherein the refrigerant line comprises the compressor (554), the condenser (556), the expansion valve (558), and the evaporator (552), a first subcooler (562), and a second subcooler (564), and in which connections in the refrigerant line providing a flow path for the working fluid include:
the condenser (556) is connected to the first subcooler (562);
the first subcooler (562) is connected to the expansion valve (558) via the second subcooler (564);
the expansion valve (558) is connected to the evaporator (552);
the evaporator (552) is connected to the compressor (554) via the second subcooler (564); and
the compressor (554) is connected to the condenser (556);
and wherein the water line comprises a water inlet and water outlet, the first subcooler (562), and the condenser (556), in which connections in the water line providing a flow path for water include:
the water inlet is connected to the first subcooler (562);
the first subcooler (562) is connected to the condenser (556); and
the condenser (556) is connected to the water outlet,
optionally in which the refrigeration system (500) comprises at least one PICV (570, 572) (Pressure Independent Control Valve) and a suitable control device for controlling the at least one PICV (570, 572).

15. A method of chilling milk (600) or another product, the method comprising the steps of:
reducing the temperature of the milk (600) or product from an initial temperature to a subsequent temperature which is less than 10°C by using the heat management system (100) as claimed in any of claims 1 to 14., optionally in which at least a portion of the chilled milk or product is transferred to one or more containers to form one or more containers of milk or product.
